# EUROPÄISCHE PATENTSCHRIFT

(11) **EP 1 495 884 B1**
(45) Veröffentlichungstag und Bekanntmachung des Hinweises auf die Patenterteilung: **12.12.2007**
(21) Anmeldenummer: 04015645.7
(22) Anmeldetag: 02.07.2004
(51) Int. Cl.: B60D 1/02

(54) **Anhängekupplung**
Trailer coupling
Attelage de remorque

(30) Priorität: 09.07.2003 DE 10331043; 01.12.2003 DE 10356032
(43) Veröffentlichungstag der Anmeldung: 12.01.2005
(73) Patentinhaber: Schnabl, Peter, 80935 München (DE)
(72) Erfinder: Schnabl, Paul, 80995 München (DE)
(74) Vertreter: Schaumburg, Thoenes, Thurn, Landskron

(56) Entgegenhaltungen:
- DE-A- 3 701 369
- DE-A- 19 524 249
- DE-A- 19 710 583
- DE-A- 19 840 001
- DE-U- 29 716 295
- FR-A- 1 194 652
- FR-A- 1 479 407

## Beschreibung

Die Erfindung betrifft eine Anhängekupplung, umfassend einen an einem Zugfahrzeug anzubringenden Kupplungskopf mit einem Fangmaul zur Aufnahme der Zugöse an einer Zugstange eines zu ziehenden Fahrzeugs, wobei das Fangmaul durch einen oberen und einen unteren Fangmaullappen begrenzt ist, und mit einem senkrecht zu den Fangmaullappen gerichteten Kupplungsbolzen, der durch eine Betätigungsvorrichtung zwischen einer Öffnungs- oder Freigabestellung und einer Schließ- oder Kupplungsstellung verstellbar ist, in welcher der Kupplungsbolzen die Zugöse durchsetzt. Eine solche Anhängekupplung ist aus der FR 1194652 bekannt.

Vor allem im land- und forstwirtschaftlichen Bereich können die heutigen Kupplungen gewünschte Eigenschaften wie die Aufnahme hoher Stützlasten und einen höheren Betriebs- und Bedienungskomfort bei gleichzeitig kompakter Bauweise nur unzureichend erfüllen. Eine hohe Stützlast führt dazu, daß die Zugöse mit hohem Druck auf dem unteren Fangmaullappen aufliegt, wodurch sich die Drehbeweglichkeit der Zugöse in dem Fangmaul verringert und die Kupplung einem erhöhten Verschleiß unterliegt.

Der Erfindung liegt die Aufgabe zugrunde, eine Anhängekupplung der eingangs genannten Art so auszubilden, daß sie unter Vermeidung der vorstehend genannten Nachteile höhere Stützlasten aufnehmen kann.

Diese Aufgabe wird erfindungsgemäß dadurch gelöst, daß im unteren Fangmaullappen ein Zugösenauflager um die Achse des Kupplungsbolzens drehbar gelagert ist. Das Drehlager kann ein einfaches Gleitlager oder aber auch ein Wälzkörperlager sein.

Bei der erfindungsgemäßen Lösung wird selbst bei hohen Stützlasten eine Reibung zwischen der Zugöse und dem unteren Fangmaullappen praktisch vollständig vermieden. Dadurch wird die Drehbeweglichkeit der Zugöse und somit auch die Lenkbarkeit des angehängten Fahrzeuges erhöht und der Verschleiß der Kupplung verringert.

Vorzugsweise ist die Auflagefläche des Zugösenauflagers ballig ausgeführt, sodaß auch eine Schwenkbewegung der Zugöse relativ zum Fangmaul nicht behindert wird, da sich die Zugöse auf der balligen Auflagefläche abwälzen kann.

Vorzugsweise trägt die Auflagefläche eine Dämpfungsauflage aus einem elastischen Material, die austauschbar sein kann und nicht nur geräuschmindernd wirkt, sondern auch den Verschleiß mindert bzw. als einfaches Verschleißteil bei Bedarf erneuert werden kann.

Bei einer bevorzugten Ausführungsform der Erfindung ist das Wälzkörperlager ein Kegelrollenlager. Dieses kann in axialer Richtung (bezogen auf die Kupplungsbolzenachse) nach unten und in radialer Richtung hohe Kräfte aufnehmen. Gleichzeitig bleibt das Lager unter Belastung automatisch spielfrei.

Damit das freie Ende des Kupplungsbolzens im unteren Fangmaullappen sicher gehalten werden kann, hat das Zugösenauflager eine Öffnung zur Aufnahme des freien Kupplungsbolzenendes. Vorzugsweise ist das Zugösenauflager ferner mit einem radial zur Kupplungsbolzenachse gerichteten Radialarm verbunden, der aus einer mittleren Ruhelage, in die er vorgespannt ist, gegen diese Vorspannkraft in beiden Schwenkrichtungen um die Kupplungsbolzenachse auslenkbar ist. Damit wird erreicht, daß die Dämpfungsauflage im unbelasteten Zustand immer in ihre Grundposition zurückkehrt bzw. in dieser Grundposition verbleibt. Die Vorspannung kann durch zwei Schraubendruckfedern erfolgen, die in einer kreisbogenförmig gekrümmten Nut angeordnet sind, die in dem unteren Fangmaullappen ausgebildet und durch einen Verschlußdeckel abgedeckt ist. Der Radialarm liegt zwischen den einander zugekehrten Enden der beiden Schraubendruckfedern.

Bei einer bevorzugten Ausführungsform der Erfindung umfaßt das Zugösenauflager einen Innenring des Wälzkörperlagers, einen in den Innenring eingepreßten, als Endanschlag für den Kupplungsbolzen dienenden Arretierbolzen und einen mit dem Innenring verbindbaren Auflagering, auf dem die Dämpfungsauflage befestigt ist. Der Radialarm kann direkt mit dem Arretierbolzen verbunden sein. Um das Eindringen von Schmutz in das Lager zu verhindern, ist zwischen dem Auflagering und dem unteren Fangmaullappe zweckmäßigerweise eine Dichtung angeordnet.

Die folgende Beschreibung erläutert in Verbindung mit den beigefügten Zeichnungen die Erfindung anhand eines Ausführungsbeispieles. Darin zeigen:
- Figur 1: einen teilweise schematischen, die Kupplungsbolzenachse enthaltenden Schnitt durch den unteren Teil einer Anhängekupplung, gemäß einer ersten Ausführungsform der Erfindung,
- Figur 2: einen der Figur 1 entsprechenden Schnitt durch eine Anhängekupplung gemäß einer zweiten Ausführungsform der Erfindung,
- Figur 3: eine Unteransicht des unteren Fangmaullappens mit dem Radialarm in seiner Mittelstellung und
- Figur 4: eine der Figur 3 entsprechende Darstellung mit dem Radialarm in einer ausgelenkten Stellung.

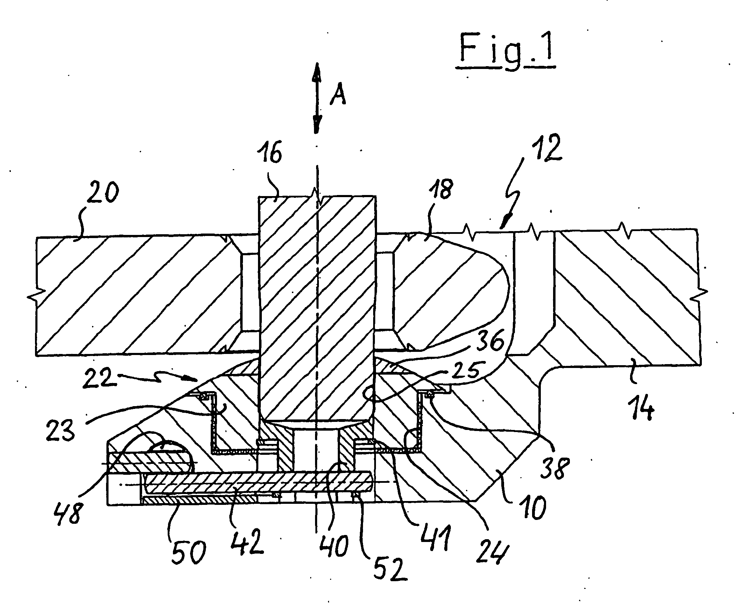

In der Figur 1 ist der untere Fangmaullappen 10 eines allgemein mit 12 bezeichneten Fangmaules einer Anhängekupplung dargestellt. Das Fangmaul 12 wird mit Hilfe eines Zapfens 14 in einem Lager an einer Traverse eines Zugfahrzeuges gehalten, sodaß es um die Längsmittelachse des Fahrzeuges drehbar ist. Die Anhängekupplung umfaßt ferner einen Kupplungsbolzen 16, der mittels einer auf dem nicht dargestellten oberen Fangmaullappen der Anhängekupplung angeordneten Betätigungsvorrichtung in Richtung des Doppelpfeiles A zwischen einer Öffnungsstellung und der in der Figur 1 dargestellten Schließstellung verstellbar ist, in welcher der Kupplungsbolzen 16 mit seinem freien Ende in eine Öffnung des unteren Fangmaullappens 10 eintaucht und dabei eine Zugöse 18 durchsetzt, die sich an einem Ende einer Zugstange 20 befindet. Über die Zugstange 20 und die Zugöse 18 werden Stützkräfte in das Fangmaul der Anhängekupplung eingeleitet, die im wesentlichen von dem unteren Fangmaullappen 10 der Anhängekupplung aufgenommen werden müssen. Die Zugöse 18 liegt also unter Umständen mit erheblichem Druck auf dem unteren Fangmaullappen 10 auf.

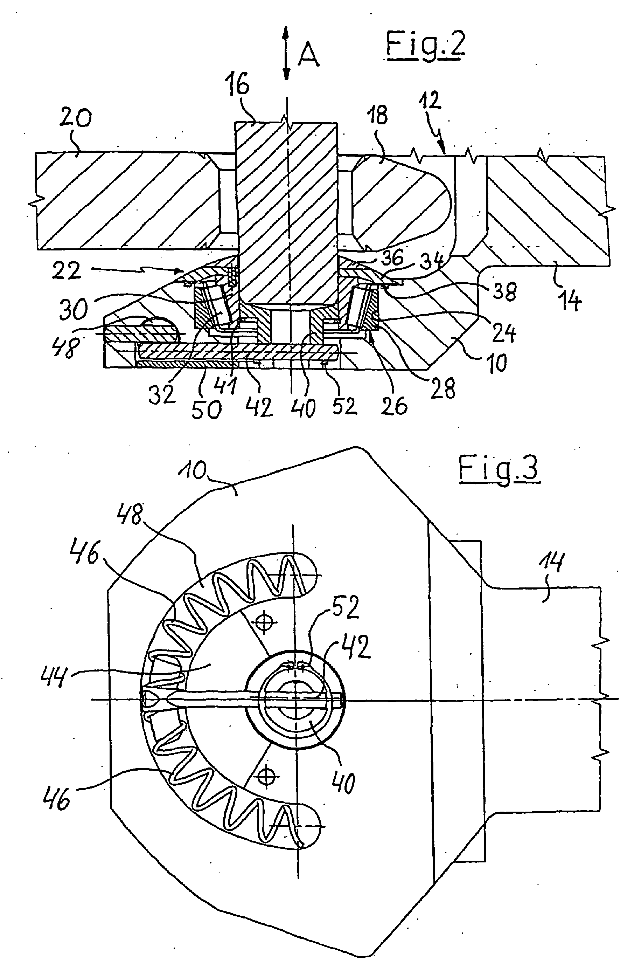

Um eine Reibung zwischen der Zugöse 18 und dem Fangmaul 10 weitgehend zu verhindern, ist an dem unteren Fangmaullappen 10 ein allgemein mit 22 bezeichnetes Zugösenauflager angeordnet. Es umfaßt bei der Ausführungsform gemäß Figur 1 einen in eine Bohrung 24 des unteren Fangmaullappens 10 eingesetzten und in diesem gleitend drehbaren Ring 23 mit einer Bohrung 25 zur Aufnahme des Kupplungsbolzens 16. Bei der Ausführungsform gemäß Figur 2 umfaßt das Zugösenauflager dagegen ein in die Bohrung 24 eingesetztes Kegelrollenlager 26 mit einem Außenring 28, einem Innenring 30 und dazwischen angeordneten Kegelrollen 32. Der Innendurchmesser des Ringes 23 bzw. des Innenringes 30 ist geringfügig größer als der Durchmesser des Kupplungsbolzens 16, so daß er diesen mit geringem Spiel aufnehmen kann.

Der Innenring 30 trägt einen Auflagering 34, der seinerseits ebenso wie der Ring 23 bei der Ausführungsform gemäß Figur 1 eine Dämpfungsauflage 36 trägt, auf der die Zugöse 32 aufliegt. Die Oberfläche von Auflagering 34 und Dämpfungsauflage 36 ist ballig ausgeführt, wie man in den Figuren erkennen kann. Zwischen dem Auflagering 34 und der Oberseite des unteren Fangmaullappens 10 ist ein Dichtring 38 eingelegt, der das Eindringen von Schmutz in das Gleit- bzw. Kegelrollenlager verhindern soll.

In den Ring 23 bzw. den Innenring 30 des Kegelrollenlagers 26 ist ein Arretierbolzen 40 eingepreßt und durch einen Sprengring 41 gesichert. Der Arretierbolzen dient als Endanschlag für den Kupplungsbolzen 16 und ist mit einem Radialarm 42 verbunden. Dieser ragt in eine kreissektorförmige Aussparung 44 an der Unterseite des unteren Fangmaullappens 10 (Figur 3) und wird durch zwei Schraubendruckfedern 46 in der in der Figur 3 dargestellten Mittellage gehalten. Die Schraubendruckfedern 46 sind in einer kreisbogenförmigen Nut 48 angeordnet, die konzentrisch zur Lagerachse an der Unterseite des unteren Fangmaullappens 10 ausgebildet ist. Die Aussparung 44 und die Nut 48 sind durch eine Abdeckplatte 50 verschlossen.

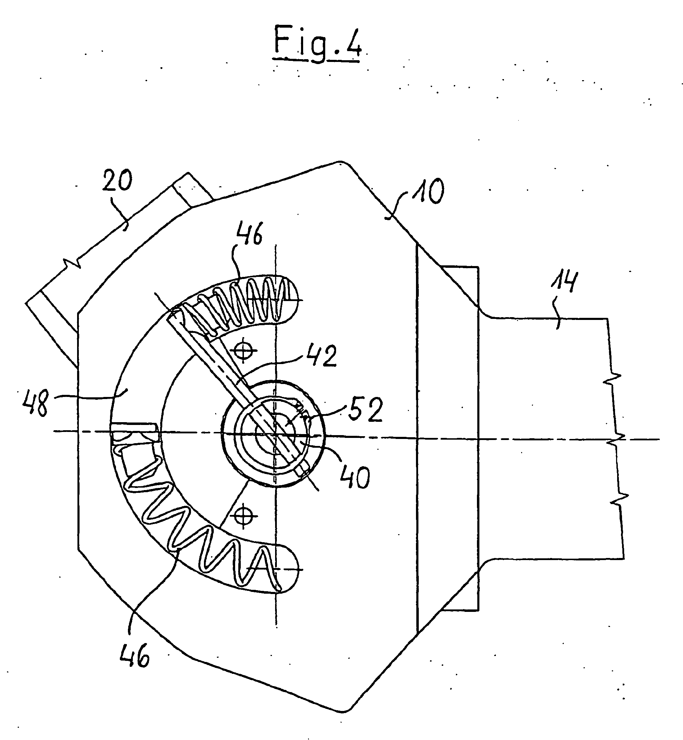

Wird der Auflagering durch die Zugöse 18 verschwenkt, so wird der Radialarm 42 gegen die Vorspannung der einen oder der anderen Schraubendruckfeder 46 mitgenommen, wie dies Figur 4 zeigt. Die Druckfedern 46 sorgen dafür, daß der Radialarm und damit auch der Auflagering stets eine mittlere Lage einnehmen, die in Figur 3 dargestellt ist.

Nach Entfernen eines den Radialarm 42 an dem Arretierbolzen 40 festlegenden Sicherungsringes 52 kann die Dämpfungsauflage 36 zusammen mit dem Ring 23 bzw. dem Auflagering, dem Innenring und dem Arretierbolzen nach oben von dem unteren Fangmaullappen 10 abgenommen werden.

Mit dem erfindungsgemäßen Zugösenauflager wird insbesondere in Verbindung mit einem frei drehbaren Kupplungsbolzen der Anhängekupplung einer Drehbewegung der Öse um die Kupplungsbolzenachse kein nennenswerter Widerstand entgegengesetzt.

## Patentansprüche

1. Anhängekupplung, umfassend einen an einem Zugfahrzeug anzubringenden Kupplungskopf mit einem Fangmaul (12) zur Aufnahme der Zugöse (18) an einer Zugstange (20) eines zu ziehenden Fahrzeugs, wobei das Fangmaul (12) durch einen oberen und einen unteren Fangmaullappen (10) begrenzt ist, und mit einem senkrecht zu den Fangmaullappen gerichteten Kupplungsbolzen (16), der durch-eine Betätigungsvorrichtung zwischen-einer Öffnungs- oder Freigabestellung und einer Schließ- oder Kupplungsstellung verstellbar ist, in der der Kupplungsbolzen (16) die Zugöse (18) durchsetzt, **dadurch gekennzeichnet, daß** im unteren Fangmaullappen (10) ein Zugösenauflager (22) um die Achse des Kupplungsbolzens (16) drehbar gelagert ist.

2. Anhängekupplung nach Anspruch 1, **dadurch gekennezeichnet, daß** das Zugösenauflager (22) mittels eines Wälzkörperlagers (26) drehbar gelagert ist.

3. Anhängekupplung nach Anspruch 1 oder 2, **dadurch gekennzeichnet, daß** die Auflagefläche (34, 36) des Zugösenauflagers (22) ballig geformt ist.

4. Anhängekupplung nach einem der Ansprüche 1 bis 3, **dadurch gekennzeichnet, daß** die Auflagefläche (34) eine Dämpfungsauflage (36) aus einem elastischen Material trägt.

5. Anhängekupplung nach Anspruch 2, **dadurch gekennzeichnet, daß** das Wälzkörperlager ein Kegelrollenlager (26) ist.

6. Anhängekupplung nach einem der Ansprüche 1 bis 5, **dadurch gekennzeichnet, daß** das Zugösenauflager (22) eine Öffnung zur Aufnahme des unteren Endes des Kupplungsbolzens (16) hat.

7. Anhängekupplung nach einem der Ansprüche 1 bis 6, **dadurch gekennzeichnet, daß** das Zugösenauflager (22) mit einem radial zur Kupplungsbolzenachse gerichteten Radialarm (42) verbunden ist, der aus einer mittleren Ruhelage, in die er vorgespannt ist, gegen die Vorspannkraft in beiden Schwenkrichtungen um die Kupplungsbolzenachse auslenkbar ist.

8. Anhängekupplung nach Anspruch 7, **dadurch gekennzeichnet, daß** in dem unteren Fangmaullappen (10) eine kreisbogenförmig gekrümmte, durch einen Verschlußdeckel (50) abgedeckte Nut (48) ausgebildet ist, in der zwei Schraubendruckfedern (46) angeordnet sind, zwischen deren einander zugekehrten Enden das freie Ende des Radialarmes (42) liegt.

9. Anhängekupplung nach Anspruch 2, **dadurch gekennzeichnet, daß** das Zugösenauflager (22) einen Innenring (30) des Wälzkörperlagers, einen in den Innenring (30) eingepreßten, als Endanschlag für den Kupplungsbolzen (16) dienenden Arretierbolzen (40) und einen mit dem Innenring (30) verbindbaren Auflagering (34) umfaßt, auf dem eine Dämpfungsauflage (36) befestigbar ist.

10. Anhängekupplung nach Anspruch 7 und Anspruch 9, **dadurch gekennzeichnet, daß** der Radialarm (42) mit dem Arretierbolzen (40) verbunden ist.

11. Anhängekupplung nach Anspruch 9 oder 10, **dadurch gekennzeichnet, daß** zwischen dem Auflagering (34) und dem unteren Fangmaullappen (10) eine Dichtung (38) angeordnet ist.

## Claims

1. Trailer coupling, comprising a coupling head to be arranged on a towing vehicle with a grab jaw (12) for receiving the towing eyelet (18) on a tow-bar (20) of a vehicle to be towed, whereby the grab jaw (12) is defined by an upper and a lower grab jaw lobe (10) and with a coupling bolt (16) arranged perpendicular to the grab jaw lobes which can be adjusted by an actuating device between an open or release position and a closed or coupled position, in which the coupling bolt (16) goes through the towing eyelet (18), **characterised in that** a towing eyelet support (22) is mounted in the lower grab jaw lobe (10) so as to be rotatable about the axis of the coupling bolt (16).

2. Trailer coupling according to claim 1, **characterised in that** the towing eyelet support (22) is mounted so as to be rotatable by means of a roller bearing (26).

3. Trailer coupling according to claim 1 or 2, **characterised in that** the bearing surface (34, 36) of the towing eyelet support (22) is spherical.

4. Trailer coupling according to one of the claims 1 to 3, **characterised in that** the bearing surface (34) has a damping bearing (36) made of an elastic material.

5. Trailer coupling according to claim 2, **characterised in that** the roller bearing (22) is a taper roller bearing (26).

6. Trailer coupling according to one of the claims 1 to 5, **characterised in that** the towing eyelet support (22) has an opening for receiving the lower end of the coupling bolt (16).

7. Trailer coupling according to one of the claims 1 to 6, **characterised in that** the towing eyelet support (22) is connected to a radial arm (42) arranged radially in relation to the coupling bolt axis, which radial arm (42) can be deflected from a central position of rest, in which it is prestressed, against the prestressing force in both pivoting directions about the coupling bolt axis.

8. Trailer coupling according to claim 7, **characterised in that** a groove (48) bent in the manner of the arc of a circle and covered by a closing cover (50) is formed in the lower grab jaw lobe (10), in which groove (48) two helical compression springs (46) are arranged, between the facing ends of which the free end of the radial arm (42) lies.

9. Trailer coupling according to claim 2, **characterised in that** the towing eyelet support (22) comprises an inner ring (30) of the roller bearing, a locking pin (40) pressed into the inner ring (30) and serving as an end stop for the coupling bolt (16) and a support ring (34) which can be connected to the inner ring (30), on which support ring (34) a damping bearing (36) can be fixed.

10. Trailer coupling according to claims 7 and 9, **characterised in that** the radial arm (42) is connected to the locking pin (40).

11. Trailer coupling according to claim 9 or 10, **characterised in that** a seal (38) is arranged between the support ring (34) and the lower grab jaw lobe (10).

## Revendications

1. Attelage de remorque, comprenant une tête d'attelage pouvant être apposée sur un véhicule avec une chape d'attelage (12), permettant de recevoir l'anneau d'attelage (18) au niveau d'une barre de remorquage (20) d'un véhicule à tracter, la chape d'attelage (12) étant délimitée par une patte de chape d'attelage supérieure et une patte de chape d'attelage inférieure (10), et comportant un pivot d'attelage (16) orienté perpendiculairement par rapport à les pattes de chape d'attelage, qui peut être réglé, par l'intermédiaire d'un dispositif d'actionnement, entre une position d'ouverture ou de dégagement et une position de fermeture ou d'attelage, le pivot d'attelage (16) traversant l'anneau d'attelage (18), **caractérisé en ce que**, dans la patte de chape d'attelage inférieure (10), un support d'anneau d'attelage (22)est monté pour tourner autour de l'axe du pivot d'attelage (16).

2. Attelage de remorque selon la revendication 1, **caractérisé en ce que** le support d'anneau d'attelage (22) est monté tournant au moyen d'un palier à corps de roulement (26) .

3. Attelage de remorque selon la revendication 1 ou 2, **caractérisé en ce que** la surface d'appui (34, 36) du support d'anneau d'attelage (22) est configurée sous une forme bombée.

4. Attelage de remorque selon l'une quelconque des revendications 1 à 3, **caractérisé en ce que** la surface d'appui (34) porte un support d'appui amortisseur (36) constitué d'une matière élastique.

5. Attelage de remorque selon la revendication 2, **caractérisé en ce que** le palier à corps de roulement est un palier à rouleaux coniques (26).

6. Attelage de remorque selon l'une quelconque des revendications 1 à 5, **caractérisé en ce que** le support d'anneau d'attelage (22) présente une ouverture permettant de recevoir l'extrémité inférieure du pivot d'attelage (16).

7. Attelage de remorque selon l'une quelconque des revendications 1 à 6, **caractérisé en ce que** le support d'anneau d'attelage (22) est relié à un bras radial (42) orienté radialement par rapport à l'axe du pivot d'attelage, qui peut être dégagé, d'une manière articulée, d'une position de repos centrale dans laquelle il est précontraint, à l'encontre de la force de précontrainte dans les deux directions de pivotement autour de l'axe du pivot d'attelage.

8. Attelage de remorque selon la revendication 7, **caractérisé en ce que**, dans la patte de chape d'attelage inférieure (10), est configurée une gorge (48) incurvée en forme d'arc de cercle, recouverte par un couvercle de fermeture (50), dans laquelle sont disposés deux ressorts hélicoïdaux de pression (46), entre les extrémités orientées l'une vers l'autre desquels se trouve l'extrémité libre du bras radial (42).

9. Attelage de remorque selon la revendication 2, **caractérisé en ce que** le support d'anneau d'attelage (22) comporte une bague interne (30) du palier à corps de roulement, un goujon d'arrêt (40), enfoncé à force dans la bague interne (30), servant de butée de fin de course pour le pivot d'attelage (16), et une bague d'appui (34) pouvant être reliée à la bague interne (30), sur laquelle peut être fixé un support d'appui amortisseur (36).

10. Attelage de remorque selon la revendication 7 et la revendication 9, **caractérisé en ce que** le bras radial (42) est relié au goujon d'arrêt (40).

11. Attelage de remorque selon la revendication 9 ou 10, **caractérisé en ce que**, entre la bague d'appui (34) et la patte de chape d'attelage inférieure (10), est disposé un joint d'étanchéité (38).
